# EUROPEAN PATENT APPLICATION

(11) **EP 4 432 146 A1**
(43) Date of publication of application: **18.09.2024**
(21) Application number: 24154140.8
(22) Date of filing: 26.01.2024
(51) Int. Cl.: G06F 21/53, G06F 21/62, G06F 21/12

(54) **INTERNET ACCESS SYSTEM AND METHOD INVOLVING INTEGRATED SECURITY**

(30) Priority: 27.01.2023 US 202363441768 P
(71) Applicant: Yankowitz, Ziv, New York, NY 10013 (US); Yacov, Mordechay, New York, NY 10013 (US)
(72) Inventor: Yankowitz, Ziv, New York, NY 10013 (US); Yacov, Mordechay, New York, NY 10013 (US)
(74) Representative: Simmons & Simmons

(57) **Abstract**

An internet access system and method providing improved security. In one exemplary implementation, the internet access system may be provided as a web-browser which restricts certain functionality to prevent the access to and display of unallowed content. According to further aspects, the web-browser may prevent certain functionality in relation to displayed content such as copy functions.

## Description

### Technical Field

The following disclosure relates to a system and method for internet access with inherent security provisions. In particular, the disclosure relates to a web-browser system for access to world wide web content via the internet.

### Background

So-called web or internet browser software is an essential tool on almost all computers with internet access. Such software must, by definition, have a communication path outside of the specific network on which the computer running the software is located. This communication path presents a security vulnerability as it provides a path by which malicious, or otherwise unwanted, data can be received within the specific network on which the software is running. Similarly the communication path provides a route for data to be sent outside of the specific network.

Web browsers on user's computers therefore provide a security weakness through which unwanted data can enter a specific network, or be sent out of a specific network. However, internet browser functionality is an essential part of computer systems and hence cannot simply be removed. The flow of data is not the only security vulnerability of existing internet access systems, as will discussed when relevant below. Other security vulnerabilities also exist, such as the risk of nefarious software capturing a user's keystrokes, or users copying data to locations which should not be permitted.

Various techniques are known to manage security vulnerabilities. However, most techniques are located in the network infrastructure requiring complex and specialist hardware and/or software to implement. Centrally-located management systems often also lack the ability to configure security configurations on a user level. Furthermore, network-based implementations cannot be used to control vulnerabilities which only occur at the user's computer. For example, it may be desirable to restrict a user's interactions with displayed content which is not possible with tools in the network infrastructure.

There is therefore a need for a system with improved security for accessing internet-based content.

### Overview

The innovations herein are defined by the following disclosure and the claims.

There is provided a method for user interaction in relation to displayed content at a computer system, the method being performed by the computer system and comprising the steps of in a user interface module receiving an input from a user requesting execution of a function in relation to displayed content; prior to executing the requested function intercepting the request by an intercept module; in the intercept module comparing the request to a configuration defining allowable and/or unallowable functions; if the requested function is an allowable function executing that function by a processing module; and if the requested function is not an allowable function, preventing execution of that function by the processing module.

The function may be selected from a copy function, a paste function, and a print function.

The requested function may not be an allowable function and displaying a message to the user indicating the function could not be executed.

The requested function may be entry of text into a private entry field in the displayed content, wherein the configuration defines that function as not allowable, and after execution of the function is prevented the method displays an on-screen keyboard with which the user can interact with a pointing device to enter text into the private entry field.

When text is entered using the on-screen keyboard a mask may be displayed in the private entry field in place of the entered text.

The entered text may be stored in the computer system for later retrieval.

After storage the entered text may be retrievable for automatic entry into a further private field.

The user interface module, intercept module, processing module, and configuration may be provided as part of an application displaying content such that those elements cannot be reconfigured by a user.

The application may be a web-browser.

There is also provided a method for controlling display of content at a computer system, the method being performed by the computer system and comprising the steps of receiving a request to display content from a specified location; comparing the location to a local database of locations and if the location is present in the local database identifying the assigned category for the location from the local database; if the location does not exist in the local database, comparing the location to a remote database of locations and identifying the assigned category for the location from the remote database; if the location did not exist in the local database, adding the location and identified assigned category to the local database; comparing the assigned category to a configuration relating to display of content in relation to categories; if the configuration indicates content from the assigned category can be displayed, requesting and displaying the content; and if the configuration indicates content from the assigned category cannot be displayed, preventing transmission of a request to the location for the content.

The local database may be compressed.

There is also provided a method for controlling display of content at a computer system, the method being performed by the computer system and comprising the steps of receiving content for display at the computer system; inspecting each element of the received content to determine if each element is allowable; blocking elements from display which are determined not to be allowable; and displaying elements which are determined to be allowable.

There is also provided a method for displaying content at a computer system, the method being performed by the computer system and comprising the steps of receiving data relating to content to be displayed and isolating that data in a container isolated from other processes of the computer system; processing the data within the container; passing the processed data to a rendering process which is within the isolated container and within a rendering sandbox; and executing the rendering process.

There is also provided a computer system provided with programming which when executed by the computer system causes the computer system to perform the methods described hereinbefore.

There is also provided a non-transitory computer-readable medium storing data which when executed by a computer system causes the computers system to perform the methods described hereinbefore.

There is also provided a computer system configured to perform the methods described hereinbefore.

There is also provided a computer system provided with programming which when executed by the computer system causes provision of a zero trust web browser to the user, the zero trust web browser rendering received content on a display of the computer system and having at least one of the following features execution of rendering processes and related processes in an isolated container; prevention of copying of data from the zero-trust web browser to other processes on the computer system; provision of a virtual keyboard for entry of data into private fields; filtering of content based on element-by-element inspection; checking of the computer system for compliance with required security standards; blocking on content based on categorisation; and provision of secure access to remote applications.

### Brief description of the drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding:
Figure 1 shows a schematic diagram of a computer network;
Figure 2 shows an exchange of instructions and data;
Figure 3 shows a schematic outline of a zero-trust web browser;
Figure 4 shows modules in an exemplary web browser;
Figure 5 shows a flow chart of a process for blocking functionality;
Figure 6 shows a flow chart of a process of preventing typing into a field;
Figure 7 shows a flow chart of a process of blocking unallowable content; and
Figure 8 shows a flow chart of assessing categories of content.

### Detailed description

The present disclosure relates to the provision of an internet access system with improved security.

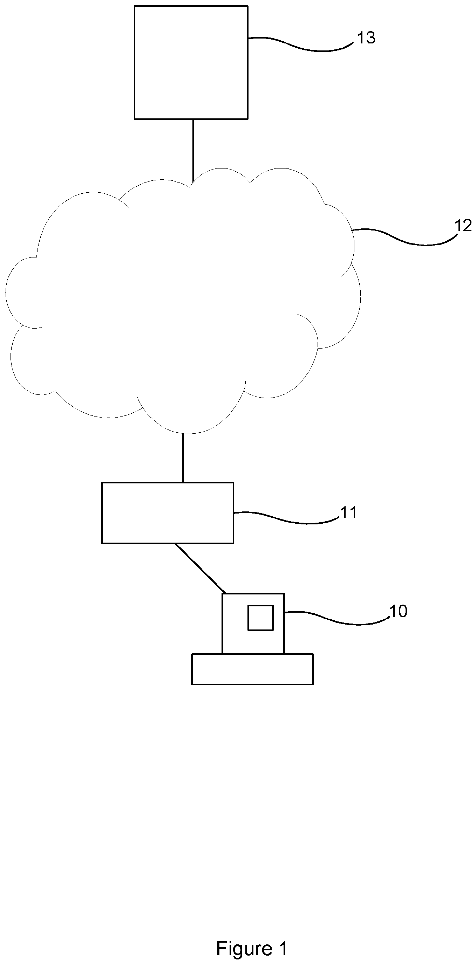

Figure 1 shows a schematic diagram of an internet access system as commonly utilised. A user's computer 10 is connected via local network infrastructure 11 to the internet 12. As is commonly known communications are transmitted between computer 10 and other computing devices 13 via the local network infrastructure 11 and the internet 12 to which the other computing device 13 are connected. Only one user's computer 10 is shown for clarity, and referred to in the singular, but as will be appreciated a plurality of such computers will be present. Similarly there will be a plurality of other computing device 13, and a potentially complex network structure albeit represented in the schematic diagram by a single entity 11.

The user's computer 10 runs software which enables a user to interact with the computing device 13. In a particular example the user's computer 10 runs a web-browser which enables them to send requests for content to the computing device 13 and to receive such content for display to, and interaction by, the user. As is well-known, modern web-browsers provide a wide range of functionality beyond simply displaying content.

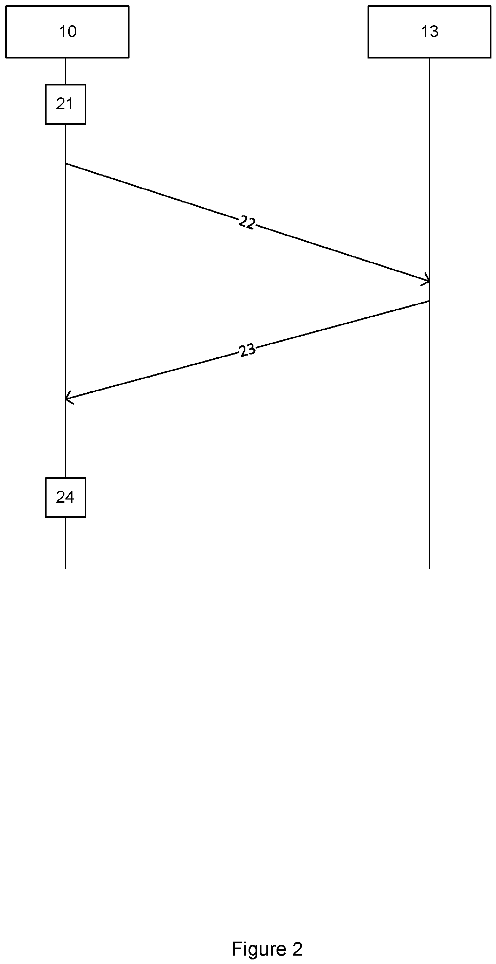

As shown in Figure 2 in a typical communication exchange at 21 a user of computer 10 enters the address, or selects a link, for content they wish to access into the web browser on the computer 10. In a simplified representation, the web-browser on the user's computer 10 transmits a request 22 to a computing device 13 storing the requested content. The computing device 13 responds 23 with the requested content, which is received by the user's computer 10. The web-browser on the user's computer 10 receives the data and processes 24 it accordingly, for example displaying content on the display of the user's computer in the web-browser display. The web-browser thus receives, processes, and displays data to the user in accordance with the user's requests.

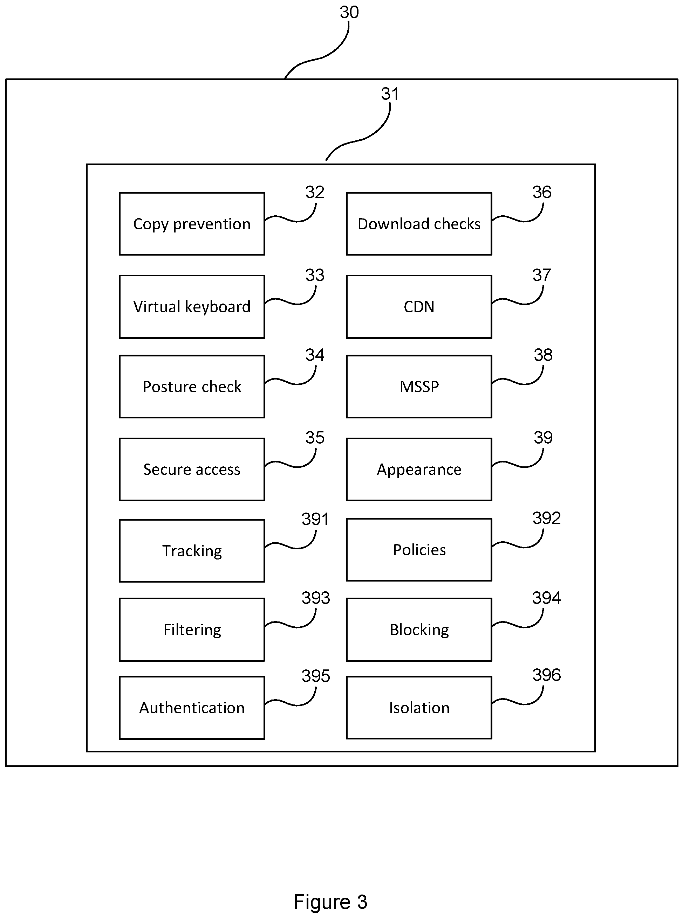

A web-browser according to the current disclosure may be termed a zero-trust browser. A zero-trust browser is isolated from the device on which it is executed, in addition to providing protection from other attacks, such that even if the device itself is compromised the zero-trust browser is still protected. This ensures security is provided both internally within the operation of the zero-trust browser, and also externally to protect the zero-trust browser operation if the device is compromised. All data is retained within the safe environment of the zero-trust browser such that it cannot be accessed by other elements of the device on which the zero-trust browser is running. Figure 3 shows a schematic diagram of the key elements of a zero-trust browser according to the current disclosure. Each of the noted features acts in cooperation to provide a zero-trust browser which addresses the security concerns of previous disclosures.

Outline 30 represents a computer and its operating system on which a zero-trust browser 31 can be implemented. Zero-trust browser 31 is implemented such that it is isolated from other programs which may be operating on the computer 30 thereby preventing security breaches, for example when the zero-trust browser being installed on a public computer. In addition, each page of content being displayed is first rendered in a separate virtual container, thereby creating an air gap between the actual computer operating system and the application. Once content is loaded the data is sent to the original rendering process which displays the content.

In addition each page of content being displayed is locked from external access and processed within its own sandbox such that external programs cannot gain access to the content.

Furthermore, the zero-trust browser 31 has a number of features which combine to ensure security.

Block 32 represents a function of the zero-trust browser which prevents the copying of content from the zero-trust browser to other destinations thereby preventing content leaking from the system. Block 33 corresponds the provision of a virtual keyboard for entry of data into private data fields in content. This function prevents the capture of key strokes by nefarious parties. The virtual keyboard may be combined with masking of content displayed in private fields to prevent viewing by a third party. Block 34 shows a function which checks the status of the computer on which the zero-trust browser is installed. For example, it may be confirmed if suitable virus checking software is installed. Use of the browser may be prevented if configured requirements are not met.

As indicated by block 35 the zero-trust browser may also provide secure network access to other applications, for example using the SSH protocol. The zero-trust browser provides EDR functionality, particularly when downloading files. The zero-trust browser download function 36 scans downloaded files during the download process (in which the files are contained within the sandbox of the download process) before they are released to the computer. If a threat is detected the file is retained within the sandbox and not released to the computer thereby preventing any risk.

The zero-trust browser may be distributed with a bespoke CDN 37 allowing for CDN based packages to be scanned during delivery and can be replaced by an official version if they are found to have been tampered with, thus eliminating vulnerabilities. A local CDN enables faster application deliver to the zero-trust browser.

The zero-trust browser system provides tools 38 for MSSPs to manage the configuration of the user's settings. The MSSP is structured to enable one administrator to manage several different policies, for example for different companies. A hierarchy of configurations for clients and users can be defined to allow centralised management of different systems and configurations in an efficient way. An application 392 may be provided to manage configuration of each user's zero-trust browser. When a user logs in to the browser using their credentials (which is required before the browser will operate) policies are transmitted securely to the zero-trust browser, applied, and stored at the end point in a secure manner (for example encrypted in a secure vault).

Block 39 indicates that the appearance of the zero trust browser can be configured to reflect a particular brand or company, for example by adding colouring, branding, or different arrangements to the UI. Many aspects of the zero-trust browser can be customised in addition to colouring or branding, for example specific logos or icons can be displayed, and messages & error codes can be made specific for a particular installation. The zero-trust browser may also provide a tracking module 391 to track a user's use of the system.

A filtering system 393 may be provided which inspects elements of content being received by the zero-trust browser and allows or blocks elements depending on whether they are allowable. A blocking process 394 may also be implemented which allows or prevents access to content based on the category of the address to which the request is sent. The filter may be conducted locally to the zero-trust browser.

Users of the zero-trust web browser 31 are required to log in or authenticate themselves using block 395 before the software will operate. As explained above this allows the application of the correct policies and configurations for the user.

Block 396 shows enhanced isolation of content and processes within the zero-trust browser. In addition to rendering content within an isolated sandbox, further related processes such as communication, storage, and code execution are also performed within an isolated sandbox or container of the zero-trust browser such that they are isolated from other elements of the computer. As well as rendering content within an isolated sandbox, any other process may also be executed within an isolated sandbox, for example network access. Furthermore, the zero-trust browser may also be configured to route all traffic through a remote browser (for example running on a cloud server). The remote browser performs the function of a browser, receiving requests from the zero-trust browser, obtaining the content, rendering the content, and transmitting it in a safe format to the zero-trust browser. The content may be transmitted as cleansed HTML, or as pixel data to be displayed at the zero-trust browser. The local computer on which the zero-trust browser is running is thus further isolated from any potentially harmful content. The remote browser may be linked to the zero-trust browser using particular security credentials (e.g. a specific browser certificate or key). Users can thus be restricted to using the zero-trust browser, with the remote browser, for all web browser access.

The various modules and functions shown in Figure 3 represent a full set of security features to provide a secure web browser system. However, as will be appreciated not all functions are required in all situations and therefore a subset of the functionality may be provided with departing from the principles of the zero-trust browser. The applied functions may be defined by a configuration module, as set out below, for example based on the user authenticated by authentication system 395.

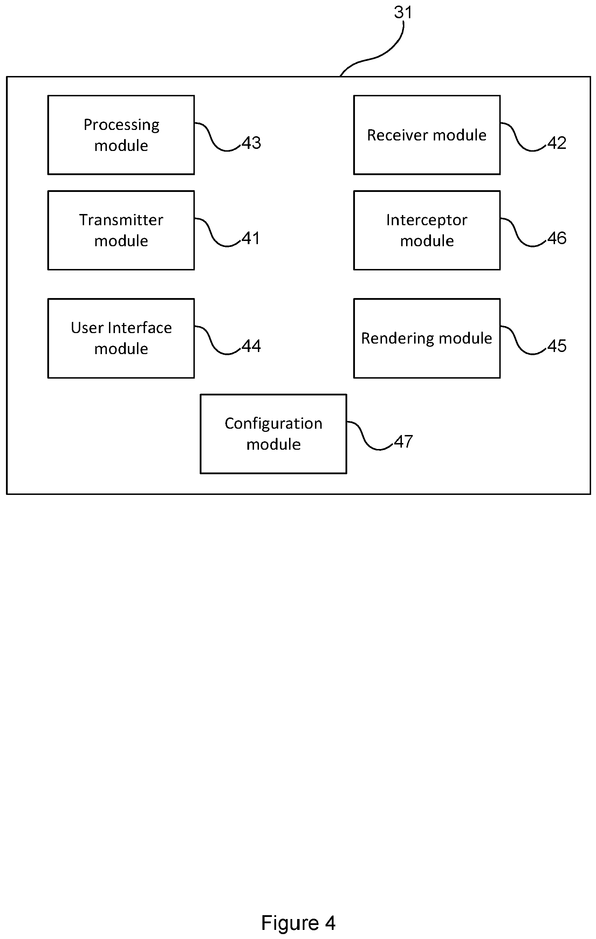

Figure 4 shows a block diagram of the example zero-trust web browser 31 for implementation of the current disclosure. The web browser may be implemented as software which may be stored locally and executed by the processor(s) of the user's computer. The web browser could also be remotely stored software, or any other implementation suitable for providing the required functionality.

Web browser 31 comprises a transmitter module 41 and a receiver module 42 for, respectively, transmitting requests to remote computing devices and receiving data from remote computing devices. Processing module 43 is responsible for interacting with the user interface module 44 to receive input and provide output, together with the transmitter module 41 and receiver module 42. The processing module 43 also interacts with rendering module 45 to control the appearance of the user interface produced by user interface module 44, and also intercept module 46 which intercepts received data and user commands before they are processed or displayed thereby allowing modification of that data.

As will be appreciated the descriptions of modules herein is for convenience only and does not restrict the manner in which the disclosed systems may be implemented. The web browser may be provided in any manner which enables the required functionality and the divisions into modules is for convenience when described the functionality only. The modules therefore characterise functions which may be provided by the web-browser when running on a computer. The web-browser provides a range of functions which enable a secure system for internet access. The provision of these functions within the web-browser addresses the problems identified previously with network-based solutions and as such provides an improved system.

The modules, particularly rendering module 45, are configured to operate using isolated sandboxes such that received content is partitioned and handled isolated from other elements of the computer. This ensures received content and its rendering has no impact on the computer while it is being processed. Analysis may be performed using an artificial intelligence system.

One type of security concern addressed by a web-browser such as that discussed in relation to Figure 4 is data leakage. Data leakage is a term used to describe the transfer of data to a location or form which is not intended and which should not occur. This may occur in a number of ways as discussed in more detail below, for example by incorrect transmission of data, copying data to a different location, accidental sharing of data end users to undesirable locations, or capturing input made for a first purpose for a second purpose for which it is not intended.

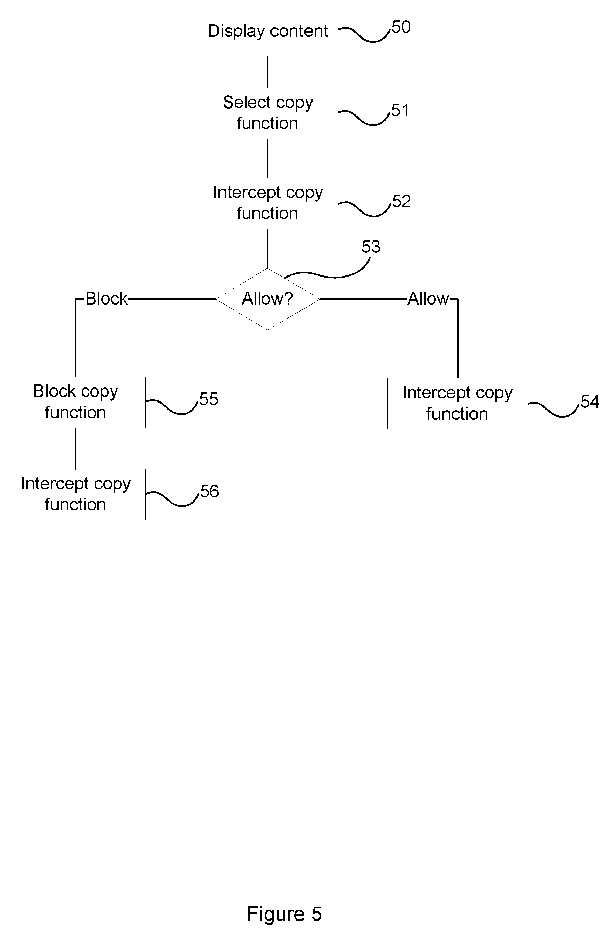

Figure 5 shows a flow chart of a first example of data leakage prevention by a web-browser according to the current disclosure. At step 50 the web browser 31 is displaying content to the user using the render module 45 and user interface module 44. The processing module 43 offers the user a copy function to allow the user to copy data from the displayed content to a different program or for storage. The copy function may be implemented within the web browser itself, or provided as a standard function by the operating system on the computer. At step 51 the user selects the copy function (for example by highlighting text and selecting a menu item or pressing keys associated with the function).

At step 52 the copy function activation is intercepted by intercept module 46 before it is processed by processing module 43. Intercept module 46 may be configured to block use of the copy function, or to allow it, and proceeds at step 53 according to its configuration. If the intercept module is configured to allow the copy function the command is released to the processing module 43 at step 54 where it is implemented. If the intercept module is configured not to allow the copy function at step 55 the intercept module 46 prevents the command reaching the processing module 43 such that the copy function is not performed. The intercept module 46 may, at step 56, display a warning to the user, using the render module 45 and user interface 44, that the copy function has been disabled.

This functionality thereby allows data leakage to be prevented by stopping data being copied from the web browser to other programs or locations on the user's computer. The intercept module 46 may be configured based on a range of parameters. For example, the intercept module 46 may prevent all use of the copy function, only for certain users, or only for certain sources of data. The configuration may be defined by the configuration module 47 which is accessible only to authorised users. For example the configuration module may be accessed only by a company's IT administration team. The configuration module 47 may be configured to allow copying between specific locations, or within the displayed page.

The intercept module, and other modules discussed herein, are provided as part of the web browser software and are hence "locked down" such that users cannot bypass the functionality as would be possible, for example, if the functionality was provided in an add-in or browser extension. The described implementation thereby allows the web-browser to be deployed to user computers by an administrator or IT team, thus retaining full control over a user's access rights.

The intercept module may also be configured to intercept other functionality to prevent data leaks via other routes. For example, the intercept module may be configured to intercept and block printing or pasting requests to prevent information being printed. The technique operates as described for copy prevention but targeted at printing or pasting requests instead. As well as blocking printing the system may also display a warning explaining that it is has done so. As set out above the behaviour of the intercept module can be configured in a variety of ways, and that configuration may be performed for all types of restriction, or differently for different restrictions. For example, the rules for preventing copying may be different than those for preventing printing.

Another use of the intercept module 46 is to affect the rendering of pages. For example, when the intercept module 46 detects a new page being loaded it can intercept the code for the page and modify it before passing the code to render module 45 and user interface 44. In a first example, the intercept module may identify the page as one which needs modification. The intercept module 46 may be configured to intercept and process all pages, or only selected pages, for example based on address. The intercept module 46 then works with the render module 45 to modify the code before it is displayed to the user. For example, the intercept module 46 may inject a background "watermark" image with information about the source of the page, or other information such as a confidentiality statement, which is displayed behind the page's content. This ensures that if a user takes a picture of the screen the captured picture contains the source or confidentiality statement thereby rendering it less usable or clearly in breach of conditions. The intercept module 46 may inject further information, for example a warning box may be displayed in an area of the screen noting confidentiality restrictions. The intercept module 46 thus has the ability to modify the code defining how pages are displayed.

The intercept module 46 can be used in a similar way to prevent loss of private information by recognising that information and replacing it in the displayed page with fake characters - for example, a credit card number could be replaced with asterisks. The intercept module 46 may also inject instructions to display an icon which allows the user to display the original data. The replacement of information may be performed based on the definition of a field, or by recognising a regular expression in text. For example, a credit number format may be recognised and automatically replaced.

Another example of using the intercept module 46 is to prevent upload of data or files to a remote location. When the intercept module 46 detects a request to upload data the intercept module 46 may block that request as discussed above thereby avoiding transfer of the data. In addition to the configuration options discussed above the behaviour of this functionality may also be dependent on the destination address being used. For example, a white list of addresses to which uploads are permitted may be maintained, or a black list of addresses to which uploads are not permitted may be maintained. The intercept module 46 compares the upload address specified to the appropriate list and acts accordingly.

A further form of data leakage is the capture of key presses by software other than that to which the key presses are directed. For example, a nefarious party may install software which captures key presses and transmits them to a remote location in the hope of capturing user name and password details, or other valuable information, from a user's interaction with their computer.

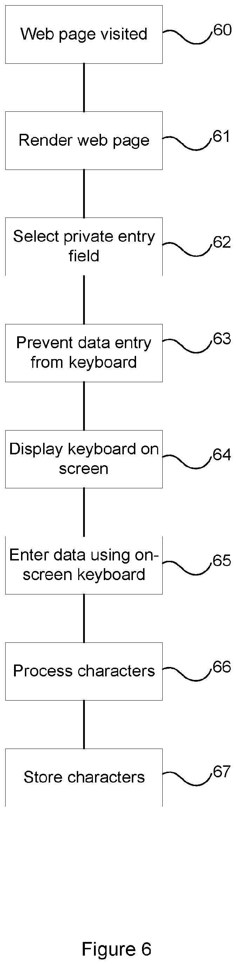

Figure 6 shows a flow chart of a method implemented by a web-browser according to the current disclosure. At step 60 a user visits a web-page which requires entry of secret information, for example a password. At step 61 the web-page is rendered by render module 45 and displayed by the user interface module 44.

At step 62 the user selects an entry field which the web-browser considers to be private (for example a password field). Intercept module 46 identifies the selection and according to its configuration at step 63 prevents the use of the keyboard to enter data into the field. Instead of accepting keyboard entry at step 64 the user interface module 44 is instructed to display an image of a keyboard (which may be known as a virtual keyboard) on the screen in which the user can select keys using a mouse, a pointing device, or other input device.

In order to enter their password in the field at step 65 the user selects the appropriate characters which are processed as if they had been typed by the user using the keyboard. However, because the characters are not entered by the keyboard they cannot be captured by malicious software. Similarly, only the user interface module 44 may know the location of each character on the screen, and hence even capturing pointer location does not assist in determining the characters entered.

At step 66 the entered characters are passed to the appropriate module for the web page and processed normally, for example for access to a secure area of a website.

At step 67 the entered characters may also be stored by processing module 43 for later re-use to make password entry more efficient. For example, the next time the user visits the particular web page the processing module may inject the captured password into the password field such that the user does not need to re-type it each time. The stored characters may be encrypted before being stored to avoid unauthorised access.

Intercepting the selection of a private entry field and displaying a graphical keyboard for a user to enter characters thereby avoids the risk of characters typed on a keyboard being intercepted and transmitted to a third party. By securely storing the password at the user's computer the (mild) inconvenience of using the on-screen keyboard is avoided and an efficient process for logging in maintained. The on-screen keyboard and secure storage thus interact to provide a secure and efficient process for entering private details such as a password.

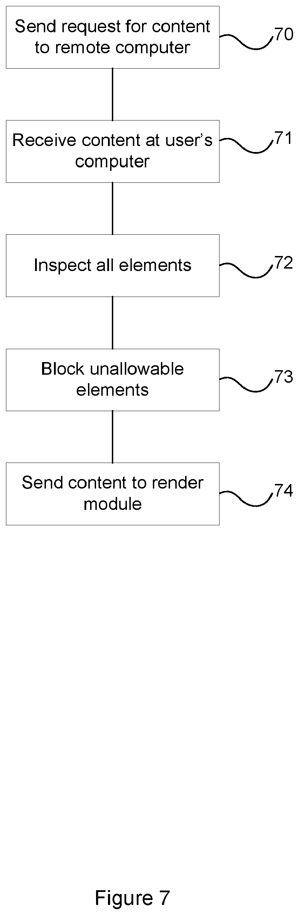

Figure 7 shows a flow chart of a further method which may be implemented by a web-browser according to the current disclosure. The method provides a reliable means to prevent malicious or undesired content being processed and/or displayed by the web-browser.

At step 70 a request is sent to a remote computer for content. At step 71 that content is transmitted by the remote computer and received at the user's computer where it is processed by the intercept module 46 in the web-browser. At step 72 each element of the received content is inspected to determine if it contains any malicious or otherwise unwanted content. For example, the element may contain advertising (which may be apparent from the source of the element). The intercept module 46 may inspect the type of content and/or the source of the element to determine if it is safe and should be displayed. The intercept module 46 may utilise an external database of known malicious or unwanted sources of content to enable those to be blocked. Threat analysis may also be performed by the software provider, for example using Artificial Intelligence techniques.

At step 73 the intercept module 46 blocks any elements which it has identified as not to be displayed. The intercept module 46 may remove those elements from the content sent to render module 45, or may replace the element with a note that the content has been removed, or other placeholder content. At step 74 the intercept module 46 forwards the content for display to render module 45 which renders the remaining elements to the user interface 44.

The process of Figure 7 thereby allows each element of requested content to be inspected and blocked if it is unallowable. As with the other processes described herein the functionality is contained within the web-browser, rather than relying on extensions, and hence cannot be disabled by users thereby providing improved security and reliability. In addition to blocking elements, the entire page could also be blocked using the same principles.

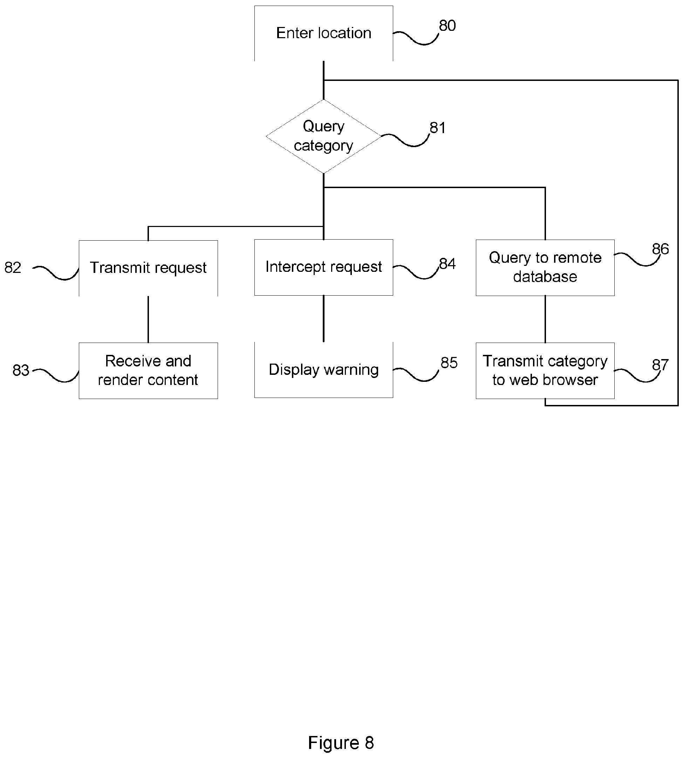

Figure 8 shows a flow chart of a method of filtering which may be applied by a web-browser according to the current disclosure. The filtering operation allows content in certain categories to be blocked. For example, content categorised as adult may be blocked from work computers. It is also possible to ensure only certain sources are utilised in each category. For example, it may be desired to restrict access to news sites to only a particular provider, while block other providers.

At step 80 the user enters a location for content, for example by entering an address or clicking on a link. At step 81 the intercept module 46 queries a local database to identify a category for the content. The local database comprises addresses and associated categorisations. The addresses may be stored in a coded manner, for example by hashing addresses, so that the information can be stored efficiently. Storing full addresses as plaintext without any coding would likely consume unacceptable amounts of storage.

At step 81 if the address is found in the local database the category is compared to a list of permitted categories to identify whether the content can be allowed. The address may also be used in the comparison if address-based filtering is applied. If the address is identified to be allowable the request is transmitted at step 82 in accordance with the user's entry. At step 83 the content is received by the web-browser and rendered by render module 45 to be displayed in the user interface 44.

If at step 81 the address is found to be unallowable, the intercept module 46 intercepts the request at step 84 before it is sent and prevents it being transmitted. At step 85 a warning may be displayed in the user interface 44 explaining why the requested content is not being displayed.

If at step 81 the address is not identified in the local database, at step 86 a query is sent with the address to a remote database which may be more comprehensive. If the address is identified in the remote database, at step 87 the categorisation is returned to the web-browser which stores the details in the local database. This approach reduces the space required by the local database since only previously-accessed addresses are stored locally. This means that the first time a user accesses a particular address it must be queried in the remote database, but when the user returns to the same address the local database is sufficient.

The method then returns to step 81 to identify whether the identified category is permitted.

The method of Figure 8 thereby allows control of which content is displayed both on an address and categorisation level. The method is implemented locally, possibly with access to a remote database, and does not require the use of any complex proxy or network configuration to filter content from different addresses. Exceptions can be configured on a category basis. Access to content can also be controlled based on keywords or regex rules defined by the configuration module. Key words and expressions can be defined as being permitted or not permitted. Key words and expressions may be applicable to content addresses or the content itself.

As explained above in addition to rendering content with a sandbox (for example, the process for rendering each page or tab may be performed in a separate sand box such that no other processes can access the rendering process), related functions may also be performed within an isolated sandbox or container. For example, the download of content, storage of data, and execution of code such as javascript can be performed in a container such that those processes are also isolated. Additional functionality can be provided within that container, for example to screen received data. Data from the isolated container is passed from the container into the rendering process sandbox for the content to be rendered. There may be a cycle of calls and transfer of data between the rendering process and other processes, for example to allow execution of functions during rendering such as may required by content utilising techniques known as "lazy loading" in which content is loaded incrementally. The effect of these techniques is that all functionality related to rendering content is isolated from the computer environment and thus secure from interference. The rendering process is both within its own sandbox, and also within the isolated container.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term "comprising" or "including" does not exclude the presence of other elements.

The term "computer" is used herein to refer to any computing device which can execute software and provide input and output to and from a user. For example, the term computer explicitly includes desktop computers, laptops, terminals, mobile devices, and tablets, as well as any similar or comparable devices. There is no intended difference between the terms computer, computing system or computing device, all of which fall within the same definition of computer.
The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk.

## Claims

1. A method for user interaction in relation to displayed content at a computer system, the method being performed by the computer system and comprising the steps of
in a user interface module receiving an input from a user requesting execution of a function in relation to displayed content;
prior to executing the requested function intercepting the request by an intercept module;
in the intercept module comparing the request to a configuration defining allowable and/or unallowable functions;
if the requested function is an allowable function executing that function by a processing module; and
if the requested function is not an allowable function, preventing execution of that function by the processing module.

2. A method according to claim 1, wherein the function is selected from a copy function, a paste function, and a print function.

3. A method according to claim 1 or claim 2, wherein when the requested function is not an allowable function and displaying a message to the user indicating the function could not be executed.

4. A method according to claim 1, wherein the requested function is entry of text into a private entry field in the displayed content, wherein the configuration defines that function as not allowable, and after execution of the function is prevented the method displays an on-screen keyboard with which the user can interact with a pointing device to enter text into the private entry field.

5. A method according to claim 4, wherein when text is entered using the on-screen keyboard a mask is displayed in the private entry field in place of the entered text.

6. A method according to claim 4 or claim 5, wherein the entered text is stored in the computer system for later retrieval.

7. A method according to claim 6, wherein after storage the entered text is retrievable for automatic entry into a further private field.

8. A method according to any preceding claim, wherein the user interface module, intercept module, processing module, and configuration are provided as part of an application displaying content such that those elements cannot be reconfigured by a user.

9. A method according to claim 8, wherein the application is a web-browser.

10. A method for controlling display of content at a computer system, the method being performed by the computer system and comprising the steps of
receiving a request to display content from a specified location;
comparing the location to a local database of locations and if the location is present in the local database identifying the assigned category for the location from the local database;
if the location does not exist in the local database, comparing the location to a remote database of locations and identifying the assigned category for the location from the remote database;
if the location did not exist in the local database, adding the location and identified assigned category to the local database;
comparing the assigned category to a configuration relating to display of content in relation to categories;
if the configuration indicates content from the assigned category can be displayed, requesting and displaying the content; and
if the configuration indicates content from the assigned category cannot be displayed, preventing transmission of a request to the location for the content.

11. A method according to claim 11, wherein the local database is compressed.

12. A method for controlling display of content at a computer system, the method being performed by the computer system and comprising the steps of
receiving content for display at the computer system;
inspecting each element of the received content to determine if each element is allowable;
blocking elements from display which are determined not to be allowable; and displaying elements which are determined to be allowable.

13. A method for displaying content at a computer system, the method being performed by the computer system and comprising the steps of
receiving data relating to content to be displayed and isolating that data in a container isolated from other processes of the computer system;
processing the data within the container;
passing the processed data to a rendering process which is within the isolated container and within a rendering sandbox; and
executing the rendering process.

14. A computer system provided with programming which when executed by the computer system causes the computer system to perform the methods of any of claims 1 to 13.

15. A computer system provided with programming which when executed by the computer system causes provision of a zero trust web browser to the user, the zero trust web browser rendering received content on a display of the computer system and having at least one of the following features
execution of rendering processes and related processes in an isolated container; prevention of copying of data from the zero-trust web browser to other processes on the computer system;
provision of a virtual keyboard for entry of data into private fields;
filtering of content based on element-by-element inspection;
checking of the computer system for compliance with required security standards; blocking on content based on categorisation; and
provision of secure access to remote applications.
